# EUROPÄISCHE PATENTSCHRIFT

(11) **EP 1 270 915 B1**
(45) Veröffentlichungstag und Bekanntmachung des Hinweises auf die Patenterteilung: **15.02.2012**
(21) Anmeldenummer: 02012139.8
(22) Anmeldetag: 01.06.2002
(51) Int. Cl.: F02D 41/00, F02P 5/15, F02D 41/02, F02D 35/00

(54) **Verfahren zur Steuerung eines Verbrennungsmotors**
Method for controlling an internal combustion engine
Procédé de commande d'un moteur à combustion

(30) Priorität: 30.06.2001 DE 10131802
(43) Veröffentlichungstag der Anmeldung: 02.01.2003
(73) Patentinhaber: ROBERT BOSCH GMBH, 70442 Stuttgart (DE)
(72) Erfinder: Hartmann, Dirk, 70469 Stuttgart (DE); Klenk, Rainer, 70806 Kornwestheim (DE)

(56) Entgegenhaltungen:
- EP-A- 0 931 924
- US-A- 5 655 365

## Beschreibung

Die Erfindung betrifft ein Verfahren zur Steuerung eines Verbrennungsmotors mit einer ersten Gruppe von Zylindern, die in einer ersten Betriebsart mit Kraftstoffüberschuß betrieben wird und mit einer zweiten Gruppe von Zylindern, die in der ersten Betriebsart mit Luftüberschuß betrieben wird, wobei beide Gruppen in einer zweiten Betriebsart mit gleichen Luft- und Kraftstoffmengen betrieben werden.

Der Betrieb verschiedener Gruppen von Zylindern mit unterschiedlichem Kraftstoff/Luft-Verhältnis dient zum Aufheizen von Katalysatoren auf eine extrem hohe Temperatur (z. B. zum Entschwefeln) mittels einer exothermen Reaktion von Kraftstoff und Sauerstoff.

Dabei kann ein Teil der Zylinder eines Verbrennungsmotors, beispielsweise eine Zylinderbank bei einem V-Motor mit Kraftstoffüberschuß und ein anderer Teil der Zylinder, beispielsweise die andere Bank eines V-Motors, mit Sauerstoffüberschuß betrieben werden.

Die unterschiedliche Aufteilung im Luft/Kraftstoffverhältnis verschiedener Zylinder wird als Lambda-Split bezeichnet. Verbrennungsmotorsteuerungen mit Lambda-Split sind aus der DE 195 22 165 C2 und der EP 0 931 924 A1 bekannt.

Aufgrund der unterschiedlichen Luft-/Kraftstoffverhältnisse in verschiedenen Zylindern ändern sich die von den Zylindern bereitgestellten Drehmomente der Zylinder beim Übergang vom Normalbetrieb ohne Lambda-Split zum Betrieb mit Lambda-Split. Eine solche Änderung kann vom Fahrer wahrgenommen werden.

Vor diesem Hintergrund besteht die Aufgabe der Erfindung darin, während des Lambda-Split-Betriebes das gewünschte Fahrerwunschmoment weiterhin bereitzustellen.

Diese Aufgabe wird bei einem Verfahren der eingangs genannten dadurch gelöst, daß ein in der ersten Betriebsart aufgrund des Luftüberschusses zu erwartender erster Drehmomentverlust der zweiten Gruppe von Zylindern durch eine gesteuert erfolgende Erhöhung der Füllung aller Zylinder wenigstens teilweise ausgeglichen wird.

Damit läßt sich der Katalysator auf extrem hohe Temperaturen erhitzen, ohne daß eine spürbare Änderung des Motordrehmomentes auftritt. Die Erfindung erlaubt damit eine Lambda-Split-Anforderung, beispielsweise zur Entschwefelung eines Katalysators, ohne daß der Fahrerwunsch dadurch mehr als allenfalls geringfügig beeinträchtigt wird. Dabei wird die vorhandene Struktur der beispielsweise aus der DE 198 51 990 bekannten Wirkungsgradberechnung genutzt, um das Sollmoment trotz des unterschiedlichen Luft/Kraftstoffverhältnisses, mit dem die Zylindergruppen betrieben werden konstant zu lassen.

Eine weitere Maßnahme sieht vor, daß die Luftfüllung aller Zylinder so erhöht wird, daß der daraus zu erwartende Drehmomentgewinn den ersten Drehmomentverlust übertrifft und daß ein zweiter Drehmomentverlust durch eine Spätverstellung der Zündung wenigstens einer der beiden Gruppen von Zylindern hervorgerufen wird und daß der erste Drehmomentverlust durch die Summe aus dem genannten Drehmomentgewinn und dem zweiten Drehmomentverlust weingstens teilweise ausgeglichen wird.

Diese Maßnahme realisiert das gewünschte Moment mittels eines weiteren Freiheitsgrades neben der Luftmenge, nämlich durch eine Änderung des Zündwinkelwirkungsgrades.

Dies erlaubt vorteilhafterweise die Bereitstellung einer Momentenreserve. Darunter versteht man, daß der Motor mit nichtoptimalem Zündwinkelwirkungsgrad betrieben wird. Durch eine Verstellung hin in Richtung des optimalen Zündwinkelwirkungsgrades kann sehr schnell zusätzliches Moment bereitgestellt werden. Dieses optional bereitzustellende Moment wird auch als Momentenreserve bezeichnet. Sie wird beispielsweise im Rahmen der Leerlaufdrehzahlregelung verwendet, um einem drohenden Drehzahlabfall schnell entgegenwirken zu können. Das durch den verschlechterten thermodynamischen Wirkungsgrad fehlende Moment wird durch eine Erhöhung der Füllung kompensiert. Bei der Aufheizung eines Katalysators bewirkt die Momentenreserve zusätzlich eine Wärmeentwicklung im Katalysator durch Umsetzung der im Motor wegen des suboptimalen thermodynamischen Wirkungsgrades des Motors nicht umgesetzten Energie des Kraftstoff/Luftgemisches im Katalysator.

Diese Reserve wirkt über die Füllungserhöhung auf beide Bänke, so daß bei der Berechnung der Stellpfade dieser Eingriff zusätzlich berücksichtigt werden muß.
Eine weitere Maßnahme sieht vor, daß bei einer Spätverstellung der Zündung von nur einer Gruppe der Zylinder die Spätverstellung bei der ersten Gruppe erfolgt.

Dies ist bei kleiner Drehmomentreserve vorteilhaft. Bei kleiner Drehmomentreserve ist das maximale Moment der zweiten Gruppe von Zylindern unter Umständen kleiner als das Sollmoment, so daß das Moment der ersten Gruppe entsprechend durch die Zündwinkeleinstellung angepaßt wird.

Eine weitere Maßnahme sieht vor, daß bei einer Spätverstellung der Zündung von nur einer Gruppe der Zylinder die Spätverstellung bei der zweiten Gruppe erfolgt.

Diese Maßnahme ist bei sehr großer Drehmomentreserve, wenn das minimale Moment der ersten Bank bereits das Sollmoment übersteigt, sinnvoll.

Eine weitere Maßnahme sieht vor, daß die Spätverstellung maximal auf einen Wert erfolgt, bei dem der Verlust an Drehmoment, den die zweite Gruppe bei gegebener Erhöhung der Luftfüllung und bei gegebenem Luftüberschuß wenigstens aufweist, gerade durch den Gewinn an Drehmoment, den die erste Gruppe bei gegebener Füllung und gegebenem Kraftstoffüberschuß aufweist, ausgeglichen wird.

Der Vorteil dieser Maßnahme liegt darin, daß beim Umschalten zwischen dem Betrieb mit und ohne Lambda-Split die Drehmomentverluste und -gewinne gerade ausgeglichen werden.

Eine weitere Maßnahme sieht vor, daß die Spätverstellung maximal auf einen Wert erfolgt, bei dem der Gewinn an Drehmoment, den die erste Gruppe bei gegebener Erhöhung der Luftfüllung und bei gegebenem Kraftstoffüberschuß wenigstens aufweist, gerade durch den Verlust an Drehmoment, den die zweite Gruppe bei gegebener Füllung und gegebenem Luftüberschuß aufweist, ausgeglichen wird.

Im folgenden wird ein Ausführungsbeispiel der Erfindung mit Bezug auf die Figuren erläutert.

Fig. 1 zeigt das technische Umfeld der Erfindung.
Fig. 2 zeigt eine andere Darstellung eines Verbrennungsmotors zusammen mit einem Katalysator. Fig. 3 zeigt ein Ausführungsbeispiel einer Zündwinkelberechnung als Stellgröße zur Einstellung eines gewünschten Drehmomentes Fig. 4 veranschaulicht die Wirkung der verschiedenen Stelleingriffe auf die Höhe der Drehmomente, die von den einzelnen Bänken geliefert werden.

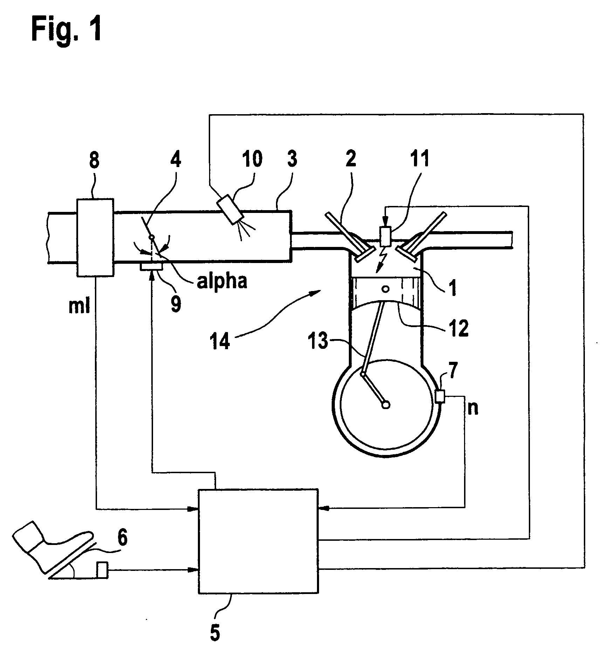

Die 1 in der Fig. 1 repräsentiert den Brennraum eines Zylinders eines Verbrennungsmotors 14. Über ein Einlaßventil 2 wird der Zustrom von Luft zum Brennraum gesteuert. Die Luft wird über ein Saugrohr 3 angesaugt. Die Ansaugluftmenge kann über eine Drosselklappe 4 variiert werden, die von einem Steuergerät 5 angesteuert wird. Dem Steuergerät werden Signale über den Drehmomentwunsch des Fahrers, bspw. über die Stellung eines Fahrpedals 6, ein Signal über die Motordrehzahl n von einem Drehzahlgeber 7 und ein Signal über die Menge ml der angesaugten Luft von einem Luftmengenmesser 8 zugeführt. Aus diesen und ggf. weiteren Eingangssignalen über weitere Parameter des Verbrennungsmotors wie Ansaugluft- und Kühlmitteltemperatur USW bildet das Steuergerät 5 Ausgangssignale zur Einstellung des zur Bereitstellung des Drehmomentes, das der Verbrennungsmotor zur Erfüllung des Fahrerwunsches und gegebenenfalls motorsteuerungsinterner Anforderungen liefern muß. Interne Anforderungen resultieren beispielsweise aus dem Antrieb von Nebenaggregaten wie einem Generator und/oder einem Klimakompressor. Dies wird erreicht durch eine Veränderung der Zylinderfüllung durch eine Verstellung des Drosselklappenwinkels alpha durch ein Stellglied 9 und durch eine Veränderung der Kraftstoffmenge durch Variation der Einspritzimpulsbreiten, mit denen ein oder mehrere Kraftstoffeinspritzventile 10 angesteuert werden. Abweichend von der Darstellung der Fig. 1 kann der Kraftstoff auch anstelle einer Dosierung in das Saugrohr direkt in die Brennräume 1 eingespritzt werden. Ein weiterer, das aus der Gaskraft resultierende Drehmoment beeinflußender Parameter ist der Zeitpunkt, bzw. der Kurbelwellenwinkel, bei dem das Gemisch aus Kraftstoff und Luft durch die Zündkerze im Brennraum gezündet wird. Der Drosselklappenwinkel alpha als Maß für die Zylinderfüllung mit Luft, die Einspritzimpulsbreite ti als Maß für die zur Einstellung eines gewünschten Mischungsverhältnisses zuzudosierende Kraftstoffmenge und der Zündwinkel werden im Rahmen der Erfindung als wesentliche, aufeinander abzustimmende Stellgrößen zur Realisierung des Wunschmomentes betrachtet. Die aus der Verbrennung resultierende Gaskraft wird durch Kolben 12 und Kurbeltrieb 13 in ein Drehmoment gewandelt.

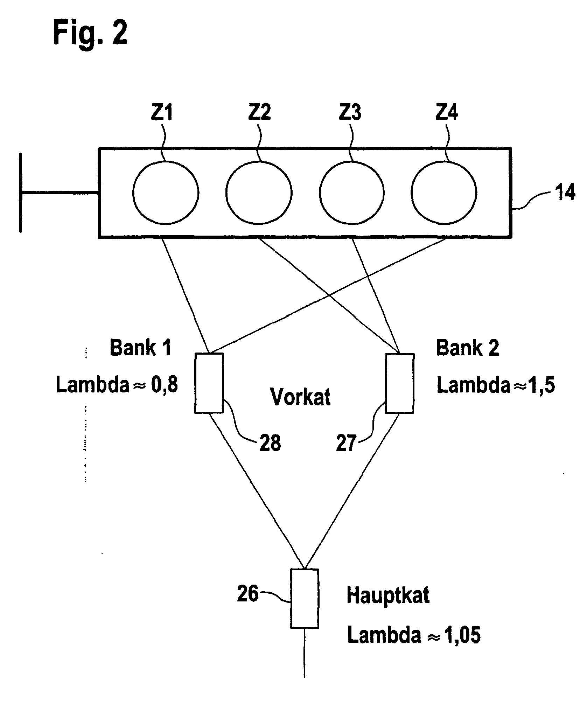

Fig. 2 zeigt eine andere Darstellung eines Verbrennungsmotors 14 zusammen mit einem Katalysator 26 und optionalen Vorkatalysatoren 27 und 28. Wenn die erste Bank mit einem Lambdawert von etwa 0,8 (Kraftstoffüberschuß) und die zweite Bank mit einem Lambdawert von etwa 1,5 (Luftüberschuß) betrieben wird, stellt sich im zeitlichen Mittel im Katalysator 26 ein Lambdawert von 1,05 ein. In der dargestellten Form handelt es sich um einen Reihenmotor mit einer ersten Zylindergruppe mit Zylindern Z1, Z4 und einer zweiten Zylindergruppe oder -bank Z2, Z3. Selbstverständlich sind auch andere Aufteilungen und Aufteilungen der Zylinder anderer Bauformen, beispielsweise von V-Motoren möglich.

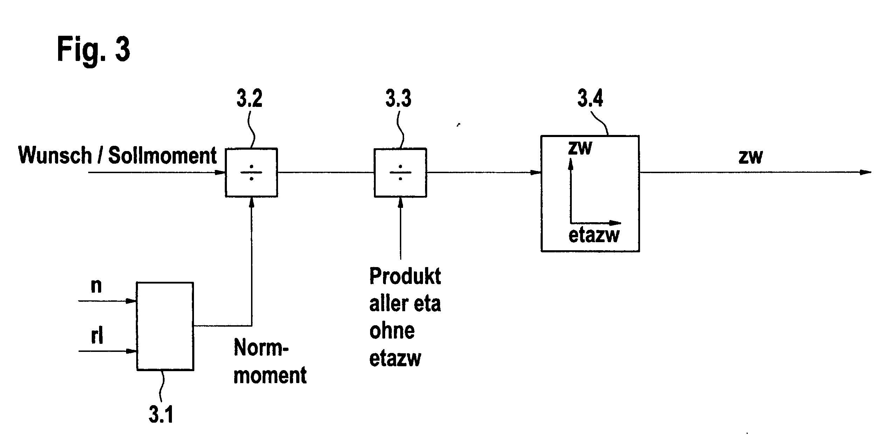

FIG. 3 zeigt ein Ausführungsbeispiel einer Zündwinkelberechnung als Stellgröße zur Einstellung eines gewünschten Drehmomentes. Block 3.1 stellt ein Kennfeld dar, das durch die Drehzahl n und die relative Luftfüllung rl adressiert wird. Die relative Luftfüllung ist auf eine maximale Füllung des Brennraums mit Luft bezogen und gibt damit gewissermaßen den Bruchteil der maximalen Brennraumoder Zylinderfüllung an. Sie wird im wesentlichen aus dem Signal ml gebildet. Die aus Meßgrößen gebildete relative Füllung rl und die Drehzahl n definieren einen Betriebspunkt des Motors. Mit dem Kennfeld 2.1 werden verschiedenen Betriebspunkten Drehmomente zugeordnet, die der Motor unter Normbedingungen in den verschiedenen Betriebspunkten erzeugt.

Normbedingungen lassen sich durch bestimmte Werte von Einflußgrößen wie Zündwinkel, Luftzahl Lambda, festlegen. Als Normbedingung bezüglich der Luftzahl kommt Lambda gleich 1 in Frage. Als Normbedingung bezüglich des Zündwinkels läßt sich der Zündwinkel definieren, bei dem sich das maximal mögliche Moment einstellt.

Bezüglich jeder Einflußgröße läßt sich ein Wirkungsgrad eta definieren als Verhältnis vom Moment unter Normbedingungen zu dem Moment, das sich bei isolierter Änderung der Einflußgröße einstellt.

Bei Abweichungen mehrerer Einflußgrößen von ihren Normwerten gibt das Produkt der Wirkungsgrade das Verhältnis des Normmomentes bei den Normwerten der Einflußgrößen zu dem Moment bei den abweichenden Einflußgrößen an.

Mit anderen Worten: Wunschmoment/Normmoment = Produkt der Wirkungsgrade. Die Division des bspw. vom Fahrerwunsch abhängigen Wunsch- oder Sollmomentes durch das für den individuellen Betriebspunkt bestimmten Normmomentes im Block 3.2 liefert daher das Produkt sämtlicher Wirkungsgrade.

Die Werte der Einflußgrößen wie Zündwinkel liegen im Steuergerät vor. Beispielsweise mit Hilfe abgespeicherter Kennlinien werden die zugehörigen Wirkungsgrade bestimmt. Es folgt die Bildung des Produktes der Wirkungsgrade der bekannten Einflußgrößen. Dies sind beispielsweise alle Einflußgrößen außer dem Zündwinkel.

Die Division des Produktes sämtlicher Wirkungsgrade durch das Produkt der Wirkungsgrade der bekannten Einflußgrößen im Block 3.3 liefert den Zündwinkelwirkungsgrad etazw.

Aus dem Zündwinkelwirkungsgrad etazw wird im Block 3.4 bspw. über einen Kennlinienzugriff der zugehörige Zündwinkel zw bestimmt.

Die Kennlinie eta von zw gibt für verschiedene Zündwinkelwerte das Verhältnis des Normmomentes bei optimalem Zündwinkel zu dem Moment bei anderen Zündwinkelwerten an.

Block 3.4 liefert damit genau den Zündwinkelwert, bei dem die Zündung erfolgen muß, um im aktuellen, durch die Luftfüllung rl und Drehzahl n definierten Betriebspunkt bei den bekannten übrigen Einflußgrößen wie Luftzahl Lambda usw. das gewünschte Moment zu induzieren. Dabei bedeutet Induzieren hier das Erzeugen der Gaskraft, die über Kolben und Kurbeltrieb das Wunschmoment liefert.

Dieser Soll-Zündwinkel determiniert in Verbindung mit der aus Meßgrößen abgeleiteten Luftfüllung rl und der mit der dazu eingespritzten Kraftstoffmenge festgelegten Luftzahl Lambda das induzierte Moment.

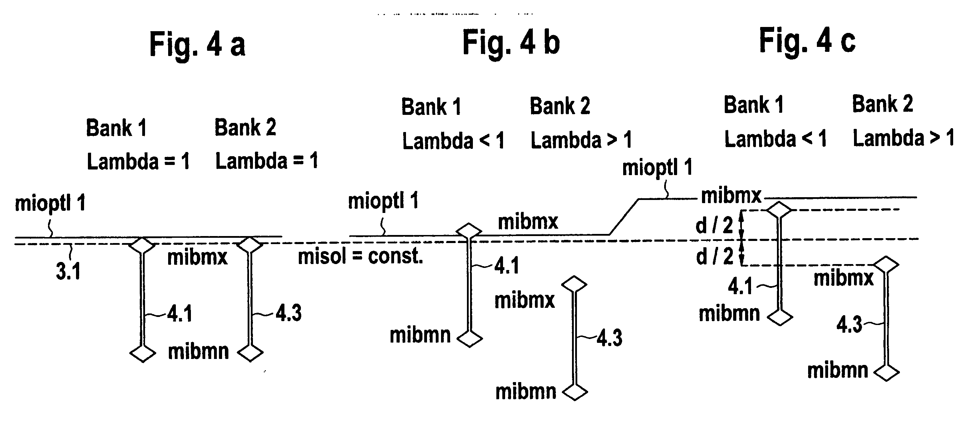

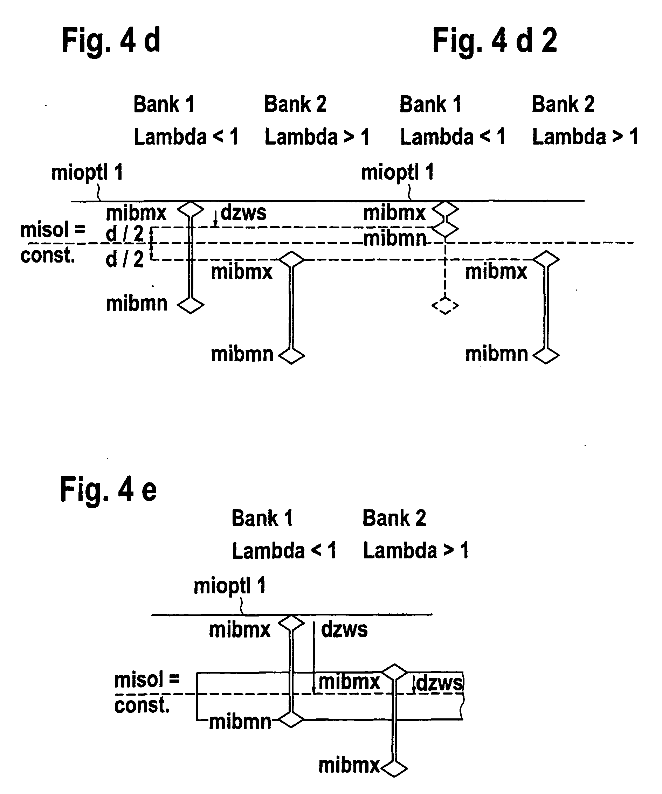

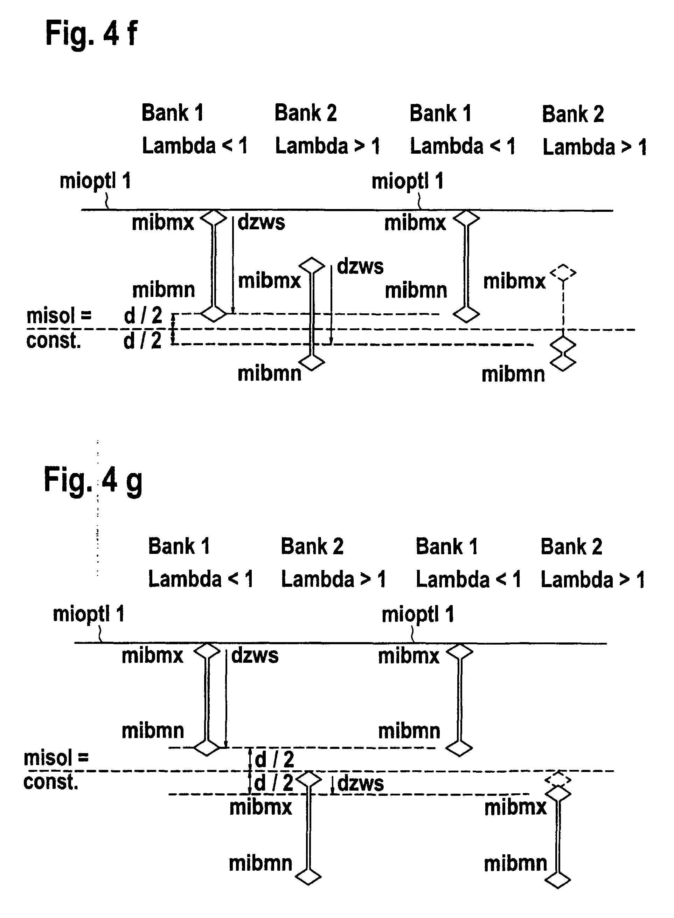

Fig. 4 veranschaulicht die Wirkung der verschiedenen Stelleingriffe auf die Höhe der Drehmomente, die von den einzelnen Bänken geliefert werden.

Fig. 4a zeigt den Zustand im Normalbetrieb.

im Normalbetrieb gleicht das Sollmoment, das durch die gestrichelte Linie 3.1 bezeichnet wird, den maximalen Basismomenten mibmx beider Bänke. Das maximale Basismoment (mibmx) ergibt sich aus der vorhandenen Füllung bei gegebenem Lambdawirkungsgrad, in diesem Fall bei stöchiometrischem Luft-/Kraftstoffverhältnis (lambda = 1) und gegebenen optimalen Bedingungen (frühest möglicher Zündwinkel). Das minimale Basismoment mibmn ergibt sich aus den gleichen Bedingungen, wobei die für die Entstehung des Drehmomentes schlechtesten Bedingungen (z. B. spätest möglicher Zündwinkel) angesetzt werden. Der Bereich zwischen den maximalen und minimalen Basismoment wird eindeutig durch den Zündwinkelverstellbereich gekennzeichnet. Die Ziffer 4.1 bezeichnet in diesem Sinne den Verstellbereich für die erste Bank und die Ziffer 4.3 bezeichnet entsprechend den Verstellbereich der zweiten Bank.

Wird nun Lambda-Split realisiert, so ergeben sich unterschiedliche Basismomente auf beiden Bänken, da die gegebenen Lambda-Wirkungsgrade unterschiedliche Werte annehmen. So kann es z.B. auf der fetten Bank zu einer Wirkungsgraderhöhung und folglich zu einer Erhöhung des Basismomentes und auf der mageren Bank zu einer Verschlechterung und folglich zu einer Absenkung des Basismomentes kommen. Entsprechend verschieben sich die Stellbereiche der Basismomente. Dies ist in Fig. 4b dargestellt. Durch das unterschiedliche Luft/Kraftstoffverhältnis auf beiden Bänken verschiebt sich der optimale Zündwinkel für jede Bank. Die Zündwinkel-Wirkungsgradberechnung erfolgt für jede Bank individuell. Folglich ergeben sich vollkommen unterschiedliche Zündwinkel für jede Bank als Funktion der Verschiebung von Lambda und des Wirkungsgrades.

Das Sollmoment kann in diesem Fall nicht realisiert werden.

Um im Mittel das geforderte Moment zu realisieren, kann die Füllung erhöht werden. Die Berechnung des Istmomentes ergibt sich aus der Mittelung der Momente der einzelnen Bänke.

Dies ist in Fig. 4c dargestellt.

Wird zusätzlich eine Momentenreserve gefordert, so erhöht sich die Füllung und somit das Niveau der Basismomente weiter. In diesem Fall kann differenziert nach der Höhe der Momentenreserve zwischen asymmetrischen (beide Bänken sind durch unterschiedliche Drehmomente gekennzeichnet) und symmetrischen (beide Bänken sind durch gleiche Drehmomente gekennzeichnet) unterschieden werden.

Diese Fälle werden im folgenden erläutert. In diesen Fällen wird der Freiheitsgrad der Zündwinkelverstellung genutzt.

Fig. 4d: Wird das Sollmoment größer als das maximal zu realisierende Moment mibmx der mageren Bank, so kann durch asymmetrische bzw. spiegelbildliche Erhöhung des Momentes auf der fetten Bank im mittel ein Moment realisiert werden, das dem Sollmoment entspricht. In diesem Fall wird das Deltamoment d/2 berechnet, um das das Sollmoment oberhalb des maximalen Basismomentes der mageren Bank liegt. Das Moment auf der fetten Bank muß nun mindestens dem Sollmoment plus dem Deltamoment gleichen. Dies wird sichergestellt, indem die minimale Basisgrenze der fetten Bank dieser Anforderung entspricht. Folglich wird die untere Grenze des Verstellbereichs soweit nach oben korrigiert, daß im Mittel das Sollmoment anliegt (Fig. 4d2). Diese Maßnahme verhindert insbesondere, daß der Zündwinkel der ersten Bank im Rahmen einer bankindividuellen Zündwinkelberechnung mit dem Ziel, den Sollwert ebenfalls bankindividuell zu erreichen, auf den zum Sollmoment korrespondierenden Zündwinkel gesetzt wird. Das Sollmoment kann nun mit dem maximalen Wert der Bank 2 und dem minimalen Wert der Bank 1 eingestellt werden. Die Momentenreserve kann durch Verstellen des Zündwinkels der ersten Bank aktiviert werden.

Fig. 4e zeigt eine symmetrische Drehmomenten-Realisierung,d.h., daß jede Bank das gleiche Moment liefert. In diesem Fall kann das Sollmoment für jede Bank mittels Zündwinkel-Spätverstellung individuell eingestellt werden, da keine Basisgrenzen über- oder unterschritten werden. In diesem Fall werden die Basisgrenzen der Zündwinkelverstellbereiche unverändert übernommen.
Fig. 4f zeigt eine asymmetrische Md-Realisierung unterhalb des minimalen Basismomentes der fetten Bank: Wird das Sollmoment kleiner als das minimal zu realisierende Moment der fetten Bank, so kann durch asymmetrische bzw. spiegelbildliche Verringerung des Momentes auf der mageren Bank im Mittel ein Moment realisiert werden, das dem Sollmoment entspricht. In diesem Fall wird das Deltamoment d/2 berechnet, um das das Sollmoment unterhalb des minimalen Basismomentes der fetten Bank liegt. Das Moment auf der mageren Bank muß nun höchstens dem Sollmoment vermindert um das Deltamoment entsprechen. Dies wird sichergestellt, indem die maximale Basisgrenze der mageren Bank dieser Anforderung entspricht. Dabei wird das Moment auf das minimale Basismoment der mageren Bank begrenzt. Folglich wird in diesem Fall die obere Grenze des Verstellbereichs soweit nach unten korrigiert, daß im Mittel das Sollmoment anliegt.

Fig. 4g zeigt eine asymmetrische Drehmomenten-Realisierung ohne Uberlappen der Zündwinkel-Stellbereiche. Man erkennt, daß auch bei ungewöhnlichen Verläufen eine Realisierung des Sollmomentes möglich ist.

## Patentansprüche

1. Verfahren zur Steuerung eines Verbrennungsmotors mit einer ersten Gruppe von Zylindern, die in einer ersten Betriebsart mit Kraftstoffüberschuss betrieben wird und mit einer zweiten Gruppe von Zylindern, die in der ersten Betriebsart mit Luftüberschuss betrieben wird, wobei beide Gruppen in einer zweiten Betriebsart mit gleichen Luft- und Kraftstoffmengen betrieben werden **dadurch gekennzeichnet, dass** zum Ausgleich des in der ersten Betriebsart aufgrund des Luftüberschusses zu erwartenden ersten Drehmomentverlusts der zweiten Gruppe von Zylindern eine gesteuert erfolgende Erhöhung der Luftfüllung aller Zylinder vorgenommen wird, dass hierbei die Luftfüllung aller Zylinder derart erhöht wird, dass der daraus zu erwartende Drehmomentgewinn den ersten Drehmomentverlust übertrifft, dass ein zweiter Drehmomentverlust durch eine Spätverstellung der Zündung wenigstens einer der beiden Gruppen von Zylindern hervorgerufen wird und dass der erste Drehmomentverlust durch die Summe aus dem Drehmomentgewinn und dem zweiten Drehmomentverlust wenigstens teilweise ausgeglichen wird.

2. Verfahren nach Anspruch 1, **dadurch gekennzeichnet, dass** bei einer Spätverstellung der Zündung von nur einer Gruppe der Zylinder die Spätverstellung bei der ersten Gruppe erfolgt.

3. Verfahren nach Anspruch 1, **dadurch gekennzeichnet, dass** bei einer Spätverstellung der Zündung von nur einer Gruppe der Zylinder die Spätverstellung bei der zweiten Gruppe erfolgt.

4. Verfahren nach Anspruch 2, **dadurch gekennzeichnet, dass** die Spätverstellung maximal auf einen Wert erfolgt, bei dem der Verlust an Drehmoment, den die zweite Gruppe bei gegebener Erhöhung der Luftfüllung und bei gegebenem Luftüberschuss wenigstens aufweist, gerade durch den Gewinn an Drehmoment, den die erste Gruppe bei gegebener Füllung und gegebenem Kraftstoffüberschuss aufweist, ausgeglichen wird.

5. Verfahren nach Anspruch 3, **dadurch gekennzeichnet, dass** die Spätverstellung maximal auf einen Wert erfolgt, bei dem der Gewinn an Drehmoment, den die erste Gruppe bei gegebener Erhöhung der Luftfüllung und bei gegebenem Kraftstoffüberschuss wenigstens aufweist, gerade durch den Verlust an Drehmoment, den die zweite Gruppe bei gegebener Füllung und gegebenem Luftüberschuss aufweist, ausgeglichen wird.

## Claims

1. Method for controlling an internal combustion engine having a first group of cylinders which, in a first operating mode, is operated with an excess of fuel and having a second group of cylinders which, in the first operating mode, is operated with an excess of air, wherein in a second operating mode both groups are operated with the same air and fuel quantities, **characterized in that**, to compensate the first torque loss of the second group of cylinders which is to be expected in the first operating mode owing to the excess of air, a controlled increase in the air charge of all the cylinders is carried out, **in that**, in the process, the air charge of all the cylinders is increased such that the torque gain to be expected from this exceeds the first torque loss, **in that** a second torque loss is caused by a late adjustment of the ignition of at least one of the two groups of cylinders, and **in that** the first torque loss is at least partially compensated by the sum of the torque gain and the second torque loss.

2. Method according to Claim 1, **characterized in that**, in the case of a late adjustment of the ignition of only one group of cylinders, the late adjustment takes place in the first group.

3. Method according to Claim 1, **characterized in that**, in the case of a late adjustment of the ignition of only one group of cylinders, the late adjustment takes place in the second group.

4. Method according to Claim 2, **characterized in that** the late adjustment takes place at a maximum to a value at which the loss of torque exhibited, as a minimum, by the second group for a given increase in the air charge and for a given excess of air is compensated exactly by the gain in torque exhibited by the first group for a given charge and for a given excess of fuel.

5. Method according to Claim 3, **characterized in that** the late adjustment takes place at a maximum to a value at which the gain in torque exhibited, as a minimum, by the first group for a given increase in the air charge and for a given excess of fuel is compensated exactly by the loss of torque exhibited by the second group for a given charge and for a given excess of air.

## Revendications

1. Procédé de commande d'un moteur à combustion interne équipé d'un premier groupe de cylindres entraînés dans un premier mode de fonctionnement avec un excédent de carburant et d'un deuxième groupe de cylindres entraînés dans le premier mode de fonctionnement avec un excédent d'air, les deux groupes étant entraînés dans un deuxième mode de fonctionnement avec les mêmes quantités d'air et de carburant, **caractérisé en ce que** la compensation de la première perte de couple de rotation du deuxième groupe de cylindres attendue dans le premier mode de fonctionnement du fait de l'excédent d'air provoque une augmentation commandée du remplissage d'air de tous les cylindres, que le remplissage d'air de tous les cylindres est augmenté de telle sorte que le gain de couple de rotation attendu est supérieur à la première perte de couple de rotation, qu'une deuxième perte de couple de rotation est provoquée par un retard de l'allumage d'au moins un des deux groupes de cylindres et que la première perte de couple de rotation est au moins en partie compensée par la somme du gain de couple de rotation et de la deuxième perte de couple de rotation.

2. Procédé selon la revendication 1, **caractérisé en ce qu'**en cas de retard d'allumage d'un seul groupe de cylindres, le retard se produit dans le premier groupe.

3. Procédé selon la revendication 1, **caractérisé en ce qu'**en cas de retard d'allumage d'un seul groupe de cylindres, le retard se produit dans le deuxième groupe.

4. Procédé selon la revendication 2, **caractérisé en ce que** le retard atteint au maximum une valeur pour laquelle la perte de couple de rotation du deuxième groupe en présence d'au moins une augmentation prévue de remplissage d'air et d'un excédent d'air prévu est précisément compensée par le gain de couple de rotation du premier groupe en présence d'un remplissage prévu et d'un excédent de carburant prévu.

5. Procédé selon la revendication 3, **caractérisé en ce que** le retard atteint au maximum une valeur pour laquelle le gain de couple de rotation du premier groupe en présence d'au moins une augmentation prévue de remplissage d'air et d'un excédent de carburant est précisément compensée par la perte de couple de rotation du deuxième groupe en présence d'un remplissage prévu et d'un excédent d'air prévu.
